# FASCICULE DE BREVET EUROPEEN

(11) **EP 1 315 009 B1**
(45) Date de publication et mention de la délivrance du brevet: **14.02.2007**
(21) Numéro de dépôt: 02292794.1
(22) Date de dépôt: 08.11.2002
(51) Int. Cl.: G02B 6/44

(54) **Module de distribution et de connexion de fibres optiques destiné à un répartiteur optique**
Anordnung zur Verteilung und Verbindung optischer Fasern für ein optisches Querverbindungssystem
Optical fibre connection and distribution module for an optical crossconnect system

(30) Priorité: 13.11.2001 FR 0114958; 07.02.2002 FR 0201732
(43) Date de publication de la demande: 28.05.2003
(73) Titulaire: Nexans, 75008 Paris (FR)
(72) Inventeur: Lecomte, Didier, 84300 Cavaillon (FR); Lepeuve, Alain, 78590 Noisy Le Roi (FR); Thibault, Jean-Pierre, 78280 Guyancourt (FR)
(74) Mandataire: Feray, Valérie

(56) Documents cités:
- WO-A-98/53354
- US-A- 4 585 303
- US-A- 5 100 221
- US-A- 5 353 367
- US-A- 5 689 606

## Description

L'invention concerne un module de distribution et de connexion de fibres optiques destiné à un répartiteur optique lui-même destiné à permettre les interconnexions qui sont à réaliser de manière sélective entre des liaisons par fibres optiques dans une installation de télécommunications comportant un nombre élevé de ces liaisons par fibres.

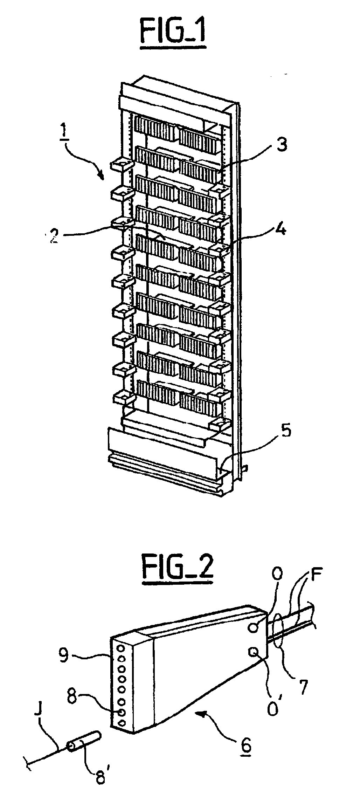

Un exemple de répartiteur optique pour installation de télécommunications est décrit dans le brevet américain 5497444. Il est illustré sur la figure 1 et il comporte une ossature 1, d'allure rectangulaire, qui porte une série de supports horizontaux 2 sur lesquels viennent se positionner des modules 3, qui sont répartis sur les supports de manière à constituer deux sous-ensembles verticaux parallèles. Chaque module est prévu pour accueillir plusieurs raccords, chaque raccord étant prévu pour permettre l'interconnexion de deux fibres, dont l'une est exploitée en tant que jarretière. Une telle interconnexion entre deux fibres s'effectue par l'intermédiaire de deux organes de connexion qui sont montés chacun à l'extrémité d'une fibre et qui viennent se positionner à l'opposé l'un de l'autre au niveau d'un raccord. Les organes de connexion des fibres servant de jarretières se positionnent devant les raccords dans le répartiteur alors que les organes de connexion des autres fibres qu'elles servent à interconnecter sont positionnés derrière. Des éléments de guidage et de support sont prévus pour permettre d'organiser la circulation des jarretières entre les raccords en tenant compte des besoins futurs en matière de réorganisation, ils sont représentés par des anneaux de passage fendus 4 et des goulottes 5, sur la figure 1.

Pour des raisons d'ordre et de sécurité, les jarretières circulent en général, soit horizontalement dans des goulottes horizontales et en particulier des goulottes associées aux supports horizontaux des modules, soit verticalement et plus particulièrement dans des anneaux fendus définissant un guide vertical à chacune des extrémités en largeur du répartiteur. Pour des raisons de standardisation, les jarretières optiques, qui sont usuellement produites en usine, sont généralement d'une longueur déterminée suffisante pour permettre un raccordement entre les éléments de connexion les plus éloignés du répartiteur et les jarretières unissant des éléments de connexion moins éloignés doivent être lovées de manière à loger dans le répartiteur leurs surlongueurs respectives. Ce logement s'effectue par exemple à l'intérieur ou au voisinage des guides verticaux et il doit donc être spécifiquement prévu.

Une telle solution qui a initialement été développée pour des jarretières constituées par des fils électriques, n'est pas satisfaisante, si le répartiteur à réaliser est un répartiteur à haute densité, de très grande capacité impliquant la mise en place d'un très grand nombre de jarretières optiques, par exemple dix mille ou plus, qui peuvent être fragiles et dont il faut éviter la détérioration, en particulier lors des modifications d'organisation.

Par ailleurs, est décrit dans le brevet US 4 585 303, un agencement de module de distribution et de connexion de fibres optiques comportant une pluralité de supports de connexion, comprenant chacun un bras creux coulissant dans un boîtier et équipé à une de ses extrémités d'un connecteur et à l'autre de ses extrémités d'une cassette de lovage d'une fibre optique raccordée audit connecteur à l'intérieur dudit bras. L'autre extrémité de chaque fibre optique est raccordée au câble optique de transmission ou de distribution.

Un tel agencement de distribution et de connexion certes compact présente les problèmes techniques suivants.

Lors d'une opération sur les fibres au niveau des cassettes de lovage, le bras est coulissé à l'extérieur du boîtier avec la cassette de lovage qui lui est rigidement fixée. Si grâce à la surlongueur de la fibre, cette dernière peut rester liée au câble à une de ces extrémités, le connecteur avec l'autre extrémité de la fibre est impérativement déconnecté. En d'autres termes, toute opération sur le tronçon de fibre optique située dans la cassette de lovage entraîne un déplacement de toute la fibre optique disposée dans le boîtier. Ceci entraîne des interventions particulièrement lourdes.

De plus, cet agencement connu nécessite un espace de manipulation important à l'extérieur du boîtier compte tenu de l'encombrement du bras et de la cassette, lorsque ce bras est coulissé hors du boîtier.

Par ailleurs, les documents de brevet US 4 585 303 et US 5 689 606 décrivent également de telles cassettes de lovage.

L'invention résout ces problèmes d'encombrement en proposant un module de distribution et de connexion permettant des opérations sur la fibre optique lovée dans la cassette sans nécessité de déconnexion et sans grand encombrement, ceci tout en procurant une distribution particulièrement compacte particulièrement adaptée à un répartiteur de grande densité.

Pour ce faire, l'invention propose un module de distribution et de connexion de fibres optiques comportant un bras de guidage de chaque fibre fixé par sa première extrémité sur un support de rangée d'embases de connexion et relié par sa seconde extrémité à une cassette de lovage de chaque fibre, caractérisé en ce que ladite cassette de lovage est montée sur ledit bras par l'intermédiaire d'une articulation, ledit bras étant doublement coudé en sens inverse dans deux dimensions et de préférence à mi-longueur.

L'articulation d'une cassette sur un bras support fixé dans un répartiteur permet de la déplacer entre des positions qui correspondent l'une à une position normale d'exploitation pour laquelle elle est insérée entre deux autres cassettes avec lesquelles elle est alors alignée et une position propice aux interventions pour laquelle elle est quasi totalement sortie de l'alignement de cassettes dans lequel elle est normalement incorporée.

Les bras constituant les éléments individuels de support des embases et les cassettes de lovage au niveau d'une baie sont agencés pour pouvoir être assemblés par groupes rassemblant chacun les embases de deux rangées voisines qui sont fixées chacune sur deux supports parallèles dont l'un leur est commun et au long duquel les bras sont alternativement positionnés, l'un en dessus et le suivant en dessous.

Lesdits bras, identiques entre eux, étant doublement coudés en sens inverse dans deux dimensions permettant aux cassettes de lovage, respectivement portées par des bras alternées de part et d'autre d'un des supports parallèles qui est commun à un groupe, d'être disposées dans un même alignement à l'intérieur de la baie, lorsqu'elles sont en position d'exploitation, du fait de l'alignement des éléments d'articulation pour cassettes que comportent ces bras alternés de part et d'autre d'un même support commun et des dimensionnements respectifs des cassettes et des bras.

Cette courbure suivant deux axes perpendiculaires du bras permet un agencement de deux bras superposés tête-bêche dans une largeur limitée aux pas de positionnement d'un module.

Selon un mode de réalisation préféré de l'invention, ledit bras est fixe, une fois installé sur un répartiteur.

Selon un mode de réalisation préféré, ledit bras comporte, à sa seconde extrémité, un élément d'articulation pour ladite cassette constitué d'un pivot horizontal.

De préférence, ce pivot fait saillie latéralement d'un prolongement plan du fond d'un canal en U que forme le bras.

Ce canal en U est destiné au passage et au maintien en place de fibres intermédiaires de liaison entre les éléments individuels de connexion de l'embase, logée dans le bras, et les fibres de liaison, qui proviennent de câbles de transmission ou de distribution aboutissant au répartiteur et qui ont une extrémité lovée reliée par une épissure à une desdites fibres intermédiaires de liaison dans la cassette de lovage que porte le bras.

Cet élément d'articulation faisant saillie latéralement d'un prolongement plan du fond du canal en U pour fibres intermédiaires que forme le bras, permet de libérer le passage pour ces fibres intermédiaires vers l'intérieur de la cassette que porte le bras, quelle que soit la position de cette cassette par rapport au bras qui la porte.

Selon un mode de réalisation préféré, ladite cassette comporte un élément d'articulation, formé d'une portée pour pivot, complémentaire de l'élément d'articulation porté par le bras de support.

Avantageusement, l'élément d'articulation complémentaire porté par la dite cassette est entouré par deux conduits pour fibre, un premier de ces conduits, réalisé vers l'intérieur de la cassette par rapport à l'autre et à l'élément d'articulation complémentaire qu'il jouxte, étant destiné au passage de la fibre vers le bras portant la cassette, lorsque celle-ci est portée par l'intermédiaire de l'élément d'articulation complémentaire que ce premier conduit jouxte, le second de ces conduits, réalisé vers l'extérieur de la cassette par rapport au premier conduit et à l'élément d'articulation complémentaire qu'il jouxte, étant destiné au passage des fibres émanant de câbles de transmission ou de distribution qui sont raccordées à la cassette.

Il est ainsi prévu que les fibres d'entrée/sortie et les fibres intermédiaires de liaison reliées entre elles au niveau d'une cassette pénètrent par des canaux qui leur sont réservés de part et d'autre d'une même portée d'axe de la cassette

De préférence, ladite cassette comporte deux éléments d'articulation, symétriquement disposés par rapport au plan transversal au niveau des extrémités d'un des grands côtés du boîtier que forme la, la cassette s'articulant par l'un ou l'autre de ces deux éléments d'articulation complémentaires suivant le montage prévu pour le bras.

Avantageusement, ladite cassette de lovage porte un cliquet d'encliquetage destiné à coopérer avec un orifice correspondant du bras.

L'invention, ses caractéristiques et ses avantages sont précisés dans la description qui suit en liaison avec les figures évoquées ci-dessous.

La figure 1 correspond à une vue en perspective du répartiteur optique connu succinctement décrit ci-dessus.

La figure 2 présente un exemple d'une embase de connexion connue et d'une fiche, tels qu'envisagées dans un répartiteur selon l'invention.

La figure 3 présente une vue de face d'un répartiteur optique selon l'invention.

La figure 4 présente une vue de droite du répartiteur optique de la figure 2.

La figure 5 présente une vue partielle en perspective d'un détail de réalisation relatif au répartiteur illustré sur les figures 3 et 4.

Les figures 6 et 7 présentent une vue en perspective et une vue de dessus d'un exemple de bras de support pour embase de connexion d'un répartiteur optique selon l'invention.

La figure 8 présente une vue en perspective d'une cassette de lovage de fibre d'un répartiteur optique selon l'invention.

Les figures 9 et 10 sont des vues en perspective d'un module conforme à l'invention.

Un exemple d'embase optique multipoint 6, susceptible d'être précâblée est illustrée, à titre d'exemple sur la figure 2. Cette embase est prévue pour permettre le raccordement individuel d'un nombre donné de jarretières J, supposées composées d'une seule fibre optique dans l'exemple donné, à un nombre correspondant de fibres optiques F le plus généralement issues d'un même câble de transmission ou de distribution d'une installation. Les jarretières et les fibres auxquelles elles se connectent sont équipées d'éléments de connexion individuels complémentaires. Dans la réalisation envisagée ici, les jarretières sont supposées équipées de fiches mâles de connexion, individuelles, telle la fiche tubulaire rectiligne 8' montée en extrémité d'un tronçon de jarretière J sur la figure 2, alors que les fibres auxquelles ces fiches doivent se raccorder sont équipées d'éléments de connexion 8, complémentaires, ici alignés, qui débouchent au niveau d'une face, dite avant, 9 de l'embase, comme on le voit aussi sur la figure 2. Une embase permet par exemple de raccorder des fibres optiques faisant partie d'un même groupe 7 et par exemple d'un groupe 7 de huit fibres d'un câble. Chaque élément de connexion 8 est agencé pour recevoir d'une part, une fibre par exemple d'un câble et, d'autre part, une fiche terminant une fibre de jarretière, les deux fibres venant se positionner bout à bout l'une par rapport à l'autre. Les fiches de connexion se présentent par exemple sous la forme de fiches tubulaires, qui sont prévues pour être longitudinalement traversées chacune par une fibre de jarretière. Cette fibre vient se terminer au niveau d'une extrémité d'enfichage de la fiche qu'elle traverse et dans laquelle elle est immobilisée. Cette immobilisation est, par exemple obtenue par sertissage. L'extrémité d'enfichage est réalisée de manière connue en soi pour venir se positionner dans un conduit ménagé pour elle dans un élément de connexion 8, complémentaire, elle est susceptible d'être élastiquement retenue en position dans cet élément, après l'enfichage, si cela est considéré comme préférable. Selon une forme préférée de réalisation, il est prévu au moins un et préférablement deux repères de positionnement 0, 0' pour chaque embase, ces repères étant ici constitués par deux trous verticalement alignés, si l'on considère la face avant de l'embase comme étant dans un plan vertical de référence.

Il est bien entendu envisageable de mettre en oeuvre des jarretières qui soient différentes de celles envisagées ci-dessus et par exemple des jarretières constituées par des câbles comportant plusieurs fibres, des fibres sous isolation lâche ou serrée, des rubans multifibres dans le cadre d'un répartiteur selon l'invention. Des fiches et embases appropriées sont alors prévues pour ces différents cas. Connues en elles-mêmes elles ne seront pas décrites de manière détaillée ici.

Pour des raisons de simplification de l'exposé, les jarretières envisagées dans la suite de la description sont considérées comme composées chacune d'une seule fibre optique dans la suite de la description. Il doit cependant être entendu que l'invention se rapporte à un procédé de jarretièrage et à des répartiteurs susceptibles d'être mis en oeuvre avec des jarretières de différents types comme envisagé ci-dessus.

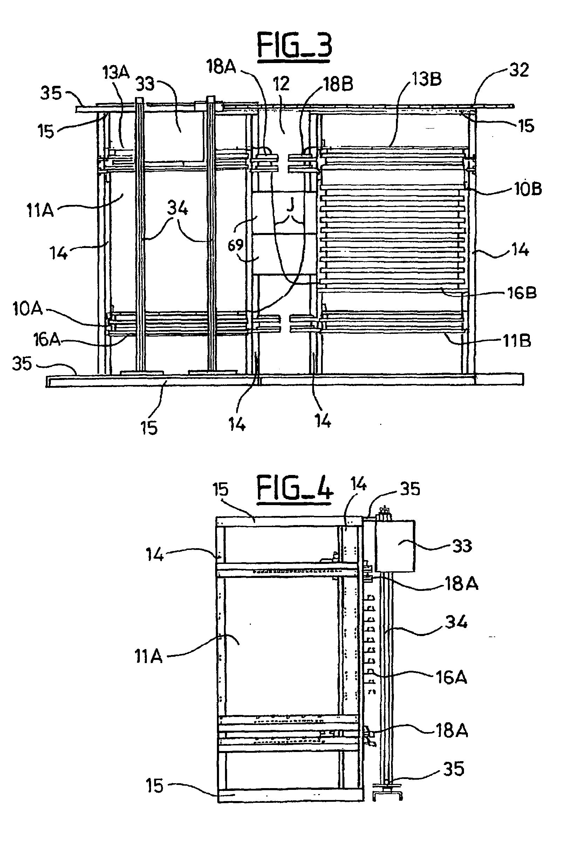

Un exemple non-limitatif de répartiteur optique pour installation de télécommunications, selon l'invention est présenté sur les figures 3 et 4. Il est supposé de grande capacité et à haute densité en éléments, ou points, de connexion et il comporte au moins une et ici deux baies de répartition alignées, telles 11A et 11B, qui comportent chacune un ensemble d'embases, tels qu'envisagées ci-dessus. Ces embases sont destinées à permettre une interconnexion sélective entre des fibres de câbles de transmission ou de distribution qui aboutissent au niveau du répartiteur, cette interconnexion étant réalisée par l'intermédiaire de jarretières dont les extrémités sont équipées de fiches compatibles avec les éléments de connexion que comportent les embases.

Dans l'exemple proposé, les deux baies 11A, 11B sont séparées l'une de l'autre par une zone de brassage 12 permettant le passage des jarretières reliant les embases comportées par l'une des baies avec ceux que l'autre comporte, les baies étant le plus généralement spécialisées, l'une étant par exemple affectée aux liaisons en départ et l'autre aux liaisons à l'arrivée.
Si le nombre de baies est plus grand que deux, il est bien entendu possible de prévoir le passage des jarretières, soit au niveau d'une zone de brassage unique entre deux des baies, soit dans des zones distribuées chacune entre deux baies, si besoin est. Il doit également être compris que dans un répartiteur constitué d'une seule baie, il est possible de prévoir une zone de brassage permettant une circulation verticale des jarretières sur au moins un des côtés de la baie.

Les embases sont supposées être du type de celle qui est montrée sur la figure 2, elles sont rassemblées par rangées dans des structures à allure matricielle où leurs faces avants sont préférablement disposées de manière coplanaire. Des moyens de repérage sont prévus pour permettre de connaître la position de chaque embase dans l'ensemble formé par toutes les embases du répartiteur et de chaque point appartenant à l'une de ces embases et correspondant à un élément de connexion individuel.

Comme également montré sur la figure 3, les embases sont disposées en rangées horizontales parallèles qui sont préférablement alignées d'une baie à l'autre, lorsqu'il y a plusieurs baies et qui sont identiquement référencées 10A ou 10B, suivant la baie qui les comporte, dans l'exemple présenté. Les embases 6 sont montées sur des profilés horizontaux que comportent chacune des baies au niveau d'une face, dite avant, deux de ces profilés respectivement référencés 13A et 13B étant montrés, sans embase, sur la figure 3. Les rangées parallèles d'embases s'interrompent au niveau de la zone de brassage 12 qui sépare les baies voisines.

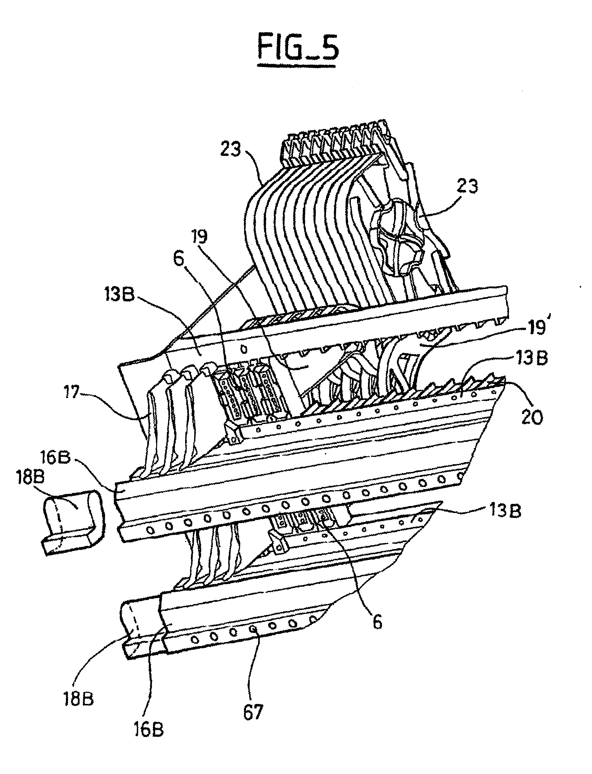

Les moyens de repérage des positions des embases qui sont prévus au niveau du répartiteur sont par exemple constitués par des ouvertures régulièrement espacées au pas des embases sur les profilés horizontaux où sont montées ces embases, ou éventuellement sur des éléments du répartiteur qui sont fixement associés à ces profilés et par exemple des goulottes horizontales individuellement associées à ces profilés. Ces moyens de repérage sont par exemple des trous 67 régulièrement ménagés dans les profilés ou dans les goulottes, comme illustré pour les profilés 13B ou les goulottes 16B sur la figure 5. Ils peuvent aussi se présenter sous la forme d'encoches 68 régulièrement réalisées au long de ces profilés ou goulottes, comme illustré sur la figure 16, ou encore de repères optiques, par exemple de type mire ou code barre.

Le raccordement, aux embases 6, des fibres issues des différents câbles de transmission et de distribution, implique l'utilisation de moyens matériels spécifiques qui sont ici organisés en modules de distribution et connexion. Ces modules se présentent sous la forme de cassettes individuellement articulées sur des éléments individuels de support réalisés sous la forme de bras. Ils se logent dans le volume intérieur propre à chacune des baies de telle sorte que les embases, qu'ils portent, aient leurs faces avants coplanaires. Les volumes intérieurs propres aux baies sont délimités par l'ossature de poutrelles servant d'éléments de support et de liaison au répartiteur, telles les poutrelles verticales 14 et horizontales 15 des baies 11A et 11B, sur les figures 3 et 4. Dans l'exemple de réalisation envisagé, les profilés 13A et 13B, qui supportent les rangées d'embases, sont fixées sur les poutrelles verticales 14 encadrant la face avant de la baie qui les comportent. Une goulotte horizontale est associée à chaque rangée d'embase, ces goulottes étant identiquement référencées 16A ou 16B pour les différentes rangées, sur la figure 3, suivant la baie, soit ici 11A ou 11B, qu'elles équipent.

Chacune de ces goulottes 16A ou 16B est destinée à recevoir les fibres optiques constituant les jarretières qui viennent se raccorder aux éléments de connexion 8 des embases 6 dont les alvéoles sont situées immédiatement au-dessus, comme le montre la figure 5 pour une des goulottes 16B. Des éléments guide-jarretières 17 sont fixés sur les profilés de support des embases de manière à courir de haut en bas le long des alvéoles des éléments de connexion 8 de chaque embase 6, au-dessus de chaque goulotte horizontale. Ces éléments sont agencés pour permettre de guider chaque jarretière entre la goulotte où elle vient reposer et l'une des alvéoles d'une embase située immédiatement au-dessus de cette goulotte. Ces éléments guide-jarretières 17 sont réalisés de manière à faciliter la dépose des jarretières dans les goulottes et leur ajustement en longueur et tension, en évitant les croisements entre jarretières voisines, à leur niveau. Ils sont ici légèrement recourbés de manière à guider les fibres qui les parcourent dans la goulotte horizontale qu'ils surplombent et vers la zone de brassage 12, située au centre du répartiteur dans l'exemple de réalisation présenté. La zone de brassage 12 ménagée entre baies voisines, telles que 11A et 11B, est ici supposée dimensionnée pour permettre le passage de la totalité des jarretières qui sont susceptibles d'être mises en place pour relier, chacune, un élément de connexion 8 d'une embase 6 d'une baie à un élément de connexion d'une embase de l'autre baie. Cette mise en place est prévue quelles que soient les positions respectives des éléments, des embases qui les comportent, et des goulottes associées à ces embases dans les baies.

Lorsque deux éléments de connexion, faisant partie d'embases qui sont situées à des hauteurs différentes dans deux baies qui les comportent, sont reliés par une jarretière, celle-ci circule dans une zone de brassage 12, de manière à passer du niveau vertical de la goulotte qui dessert l'une des embases à celui de la goulotte qui dessert l'autre. L'ensemble constitué par les jarretières transitant par une zone de brassage 12 est maintenu dans une position déterminée à l'intérieur de cette zone 12, par l'intermédiaire de guides ici dits généraux, tels 18A ou 18B chargés d'assurer un maintien et une protection des jarretières. Ces guides généraux ont ici supposés réalisés sous la forme d'éléments de forme allongée formant des bras qui sont portés par des baies voisines de manière à venir partiellement clore la zone de brassage 12 tout en ménageant centralement un passage d'orientation verticale entre eux pour permettre l'introduction de fibres dans la zone, comme on le voit sur la figure 3, pour l'exemple de réalisation présenté.

Les guides généraux sont ici supposés associés par paire, les deux guides généraux d'une paire étant respectivement montés à un même niveau vertical de part et d'autre d'une zone de brassage 12 ménagée entre deux baies voisines. Dans l'exemple de réalisation illustré sur la figure 5, les deux guides généraux 18B qui sont représentés, sont situés chacun dans le prolongement du bord avant d'une goulotte 16B. Ils sont prévus pour maintenir dans la zone de brassage 12, les jarretières qui circulent verticalement à leurs niveaux respectifs et qui transitent par des goulottes de la baie comportant la goulotte dans le prolongement de laquelle chacun d'eux est respectivement situé. Des plaques de fermeture 69 portées par des poutrelles de l'ossature du répartiteur limitent la zone de brassage 12 derrière les guides généraux, comme le montre la figure 3.

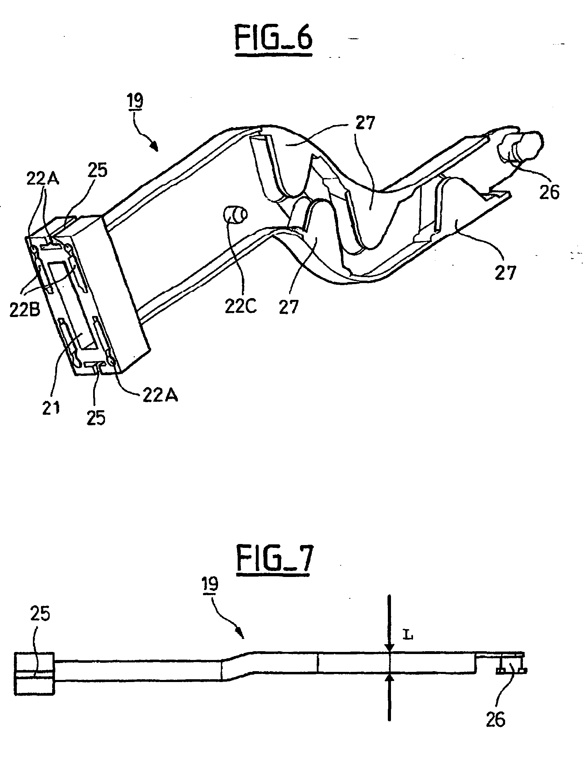

Comme indiqué plus haut, dans l'exemple de réalisation envisagé, les embases 6 sont portées par des bras individuels de support qui sont fixés côte à côte sur les profilés horizontaux, comme les bras de support 19 et 19' qui sont partiellement visibles sur la figure 5 et dont l'un est détaillé sur la figure 6. Chacun de ces bras de support comporte un logement s'ouvrant à une de ses extrémités qui est agencé pour lui permettre de recevoir une embase, il est ici prévu que les bras de support viennent se fixer sur les profilés horizontaux de support d'embases, comme illustré sur la figure 5 pour les bras 19, 19'. Les profilés tels que 13A, 13B, sont réalisés de manière à permettre un positionnement des bras et en conséquence des embases, comme symbolisé par les nervures 20 présentes sur les deux profilés 13B, situés en position haute sur la figure 5.

Le bras de support 19 est illustré sur les figures 6 et 7, comme indiqué plus haut, ce bras comporte un logement central 21 ménagé à une première de ses extrémités pour recevoir une embase 6 qui vient s'y positionner avec précision de manière que la face avant et les alvéoles des éléments de connexion que cette embase comporte, soient dans des positions prédéterminées. A partir du moment où il est prévu un jarretièrage automatisé entre éléments de connexion d'embases différentes, il est nécessaire de disposer de moyens permettant d'obtenir le positionnement des fiches qui terminent les jarretières dans les conduits des éléments de connexion 8 où ces fiches doivent venir s'insérer.

Dans la forme de réalisation proposée, il est prévu des moyens au niveau de l'extrémité d'un bras de support qui comporte un logement central 21 pour coopérer avec des moyens complémentaires prévus au niveau d'un dispositif par l'intermédiaire duquel une fiche est positionnée devant l'alvéole d'élément de connexion 8 dans laquelle elle doit être introduite. Dans la réalisation présentée, les moyens prévus au niveau de l'extrémité d'un bras support sont des formes creuses destinées à recevoir des formes pleines complémentaires, ces formes sont choisies pour permettre d'obtenir la précision de positionnement nécessaire à l'introduction d'une fiche en position de connexion dans un conduit d'un élément de connexion dont la position dans le répartiteur a été prédéterminée. Dans une première variante de réalisation, les moyens prévus au niveau de l'extrémité d'un bras de support sont constitués sous la forme de cavités cylindriques 22A qui sont ménagées à la première extrémité de chaque bras et latéralement prolongées chacune par une fente 22B d'orientation déterminée. L'embase 6 est immobilisée dans le bras dans une position déterminée, ce positionnement étant confirmé par un détrompeur 22C intérieurement ménagé au niveau du bras de manière à pénétrer dans un des trous 0 ou 0' qui constituent les repères de positionnement d'une embase 6, lorsque cette embase est dans la position prévue pour elle dans le bras, le trou à utiliser étant prédéterminé.

Dans l'exemple présenté, il est prévu quatre cavités cylindriques 22A disposées autour de l'ouverture du logement 21 prévu pour une embase 6 à la première extrémité d'un bras de support 19. Ces cavités 22A sont reliées deux à deux par une fente 22B qui leur est commune et qui est orientée parallèlement à l'axe d'alignement prévu pour les alvéoles des éléments de connexion 8 de l'embase 6 venant se loger dans le bras représenté. Une tige de centrage, préférablement cylindrique et dont le diamètre correspond alors à celui d'une cavité 22A, sert de forme pleine complémentaire pour le dispositif prévu pour permettre le positionnement d'une fiche. Cette tige de centrage, non représentée, se prolonge latéralement par une partie saillante dont les dimensions correspondent à celles d'une fente 22B où elle vient se positionner, lorsque la tige qui la porte est dans une cavité 22A, de manière à fournir une indication précise de positionnement au dispositif qu'elle équipe. Il est ici prévu quatre cavités cylindriques 22A et deux fentes 22B par bras de support.

Dans une seconde variante de réalisation, le placement précis du dispositif de positionnement de fiche est susceptible d'être obtenu par rapport à une des cavités cylindriques 22A qui sont disposées autour de l'ouverture de logement 21 d'un bras de support 19. A cet effet, le dispositif de positionnement est mécaniquement déplacé de manière à se positionner d'une manière prédéterminée par rapport au répartiteur ou plus précisément à un élément de connexion 8 d'une embase 6 précisément positionnée dans une des baies du répartiteur. La pénétration de la tige de centrage du dispositif de positionnement de fiche dans une cavité cylindrique 22A déterminée est alors susceptible d'être exploitée de manière accessoire pour un prépositionnement de l'outil de ce dispositif qui sert à insérer une fiche dans le conduit d'un élément de connexion 8 déterminé d'une embase 6 déterminée. L'outil est alors réalisé de manière que la fiche soit dotée d'une certaine possibilité d'accommodation et possède une relative liberté de mouvement latéral à l'insertion. Cette possibilité est par exemple la conséquence de la présence d'un ou de plusieurs ressorts au niveau de la fixation dudit outil, sur le dispositif qui le porte.

Le bras est doublement coudé en sens inverse à au moins approximativement mi-longueur et dans deux dimensions, comme le montrent les figures 6 et 7, ses deux extrémités étant en conséquence décalées l'une par rapport à l'autre, cet arrangement est destiné à permettre un montage à haute densité des bras 19,19', des embases 6 et des cassettes 23 de lovage des fibres constituant les jarretières, au niveau d'un répartiteur, comme illustré sur le détail de réalisation de la figure 5.

Dans une forme préférée de réalisation, la première extrémité d'un bras vient coopérer avec deux profilés de support immédiatement voisins d'une baie entre lesquels elle s'enfiche. A cet effet, elle comporte deux fentes de positionnement 25 disposées de manière à coulisser sur des nervures 20 en regard de même niveau horizontal qui sont comportées par les profilés de support entre lesquels vient s'insérer ladite première extrémité de bras, les fentes étant montrées sur les figures 6 et 7, les nervures sur la figure 5.

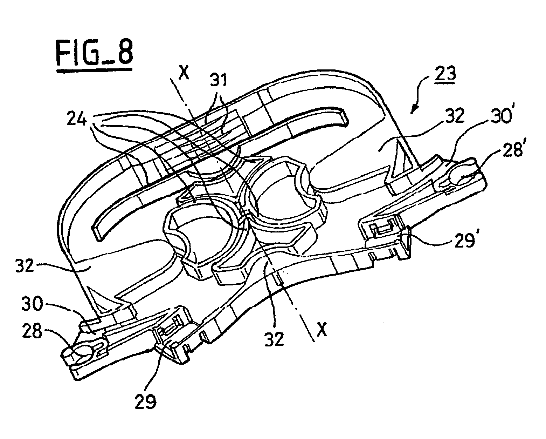

La seconde extrémité d'un bras comporte un élément d'articulation 26 qui est ici constitué par un axe latéral destiné à être horizontal, lorsque le bras est en place dans un répartiteur. Cet élément d'articulation 26 est destiné à servir de support à une cassette, telle que succinctement évoquée plus haut, qui comporte à cet effet un élément d'articulation complémentaire, ici du genre portée pour axe, comme on le voit sur la figure 8.

La structure doublement repliée qui joint les deux extrémités d'un bras est ici supposée constituée par un corps creux délimitant un canal latéral en U qui se termine par le logement 20 d'une embase 6 à une extrémité et par un prolongement du fond du U qui porte l'axe d'élément d'articulation 26. Ce canal latéral est prévu pour permettre le passage du groupe 7 de fibres qui relient les éléments de connexion d'une embase 6 à une cassette de lovage. Il est ici doté d'un labyrinthe qui est constitué par des pattes de maintien 27 s'étendant au-dessus du fond du canal, depuis les deux rives duquel ces pattes saillent alternativement d'une rive vers l'autre, de manière à assurer le maintien des fibres dans le canal après qu'elles y aient été introduites. Dans une forme préférée de réalisation, la dimension de l'extrémité du bras et ici de sa face avant, selon une direction parallèle aux profilés 13B entre lesquels il se positionne, est choisie double de la largeur L des autres parties du bras et de la cassette selon cette même direction. Cet arrangement permet un gain en matière de densité d'embases dans la mesure où il permet d'alterner des structures appartenant à des bras de support sur lesquels sont montées des embases 6 disposées dans deux rangées immédiatement voisines, lorsque les embases de ces rangées se fixent les unes au-dessus, les autres au-dessous d'un même profilé 13A ou 13B insérés entre elles, les bras correspondants ayant leurs éléments d'articulation 26 respectifs alternativement situés soit au-dessus, soit au-dessous des embases que porte le bras, lorsque les embases sont positionnées dans le répartiteur. Dans la forme de réalisation envisagée, cette alternance se traduit aussi par des orientations alternées des canaux et des éléments d'articulation des bras de support alternés relatifs à deux rangées d'embases immédiatement voisines. Les axes d'articulation respectifs 26 des différents bras montés de part et d'autre d'un même profilé se trouvant alors tous dans le même alignement où ils se font face deux par deux.

Compte tenu de la densité des embases 6, de l'espacement entre deux rangées d'embases 6, qui est dans l'exemple représenté de 80 mm, et du rayon de courbure minimum des fibres optiques, la largeur L permet d'utiliser deux rangées de N embases, chacune au pas de 2L, afin d'aligner 2N cassettes dans une distance de 160 mm.

Une forme préférée de réalisation d'une cassette de lovage 23 pour fibres d'un faisceau est présentée sur la figure 8, cette cassette est usuellement moulée et réalisée en matériau isolant de manière à former un boîtier ouvert, à fond plat et ici d'allure symétrique, par rapport à un plan médian transversal de trace XX. Ce boîtier est prévu pour être clos par le fond d'un boîtier, identique ou similaire, plaqué contre lui, ceci étant plus particulièrement réalisé lorsque les cassettes sont en position normale d'exploitation dans le répartiteur. La cassette proposée est de forme approximativement rectangulaire dans la mesure où elle dispose de deux coins symétriquement arrondis au niveau d'un de ses deux grands côtés et de deux portées d'axe 28, 28', en saillie, qui sont symétriquement disposées par rapport au plan médian transversal XX, au niveau de l'autre de ces seconds grands côtés. Elle présente une épaisseur hors tout qui est choisie à la largeur L de bras, évoquée plus haut, de manière qu'il soit possible d'accoler sur une même longueur considérée au long d'un profilé de support un nombre de cassettes correspondant au nombre de bras de support alternés et donc au nombre d'embases portées par ces bras, ces embases étant alternativement réparties au-dessus ou au-dessous du profilé considéré, comme il est montré sur la figure 5.

Les portées 28, 28' d'une cassette sont prévues pour venir s'enfourcher l'une ou l'autre sur un axe d'élément d'articulation 26 comporté par un bras de support 19, afin de solidariser ce bras et la cassette. Elles sont symétriquement réalisées chacune sous la forme d'une pince, en forme de C, apte à venir élastiquement se positionner en force autour d'un axe d'élément d'articulation 26 de bras de support, de manière à permettre ultérieurement une rotation de la cassette par rapport à cet axe et éventuellement une dissociation de la cassette et du bras de support par traction sur la cassette. La présence d'une portée 28 ou 28' à chacune des deux extrémités d'une cassette n'est pas indispensable, elle offre l'avantage de permettre d'aligner des cassettes de manière à ce qu'elles aient toutes leurs ouvertures orientées dans un même sens choisi, lorsqu'elles sont montées sur des bras de support dont les axes d'élément d'articulation sont alignés. L'un des sens est alors donné par le montage des cassettes avec leurs portées 28 respectives entourant chacune un des axes alignés, l'autre sens est alternativement obtenu, lorsque les cassettes ont leurs portées 28' respectives entourant chacune un des axes alignés.

Dans l'exemple de réalisation, tel que proposé sur la figure 5, les cassettes alignées, qui sont représentées, sont articulées sur les bras de support 19, 19' par l'intermédiaire de leurs portées 28 respectives et le fond de l'une obture l'ouverture de la suivante. Ces cassettes alignées sont alternativement portées les unes par des bras de support dont les éléments d'articulation 26 respectifs, non représentés sur la figure 5, sont positionnés plus bas que les embases 6 qu'ils portent, dans le répartiteur et les autres par des bras de support dont les éléments d'articulation 26 respectifs se trouvent être plus hauts que les embases 6 qu'ils portent. Une cassette vient se loger soit au-dessus d'un bras de support contre lequel elle vient se plaquer par celui de ses petits côtés au niveau duquel se trouve la portée par laquelle elle est articulée sur ce bras, lorsque ce dernier a son élément d'articulation au-dessus de l'embase 6 qu'il comporte, lorsqu'il est en place dans le répartiteur. Une cassette vient alternativement s'encastrer dans le creux de coude qui se trouve à proximité de l'élément d'articulation du bras de support sur lequel elle est articulée, lorsque ce bras a son élément d'articulation au-dessous de l'embase 6 qu'il comporte, lorsqu'il est en place dans le répartiteur. Les dimensions choisies pour les éléments constitutifs des bras de support et des cassettes qui sont amenés à coopérer, lorsque les bras sont en place dans le répartiteur et que les cassettes leur sont associées, sont donc choisies, de manière connue en soi, pour que les cassettes d'un alignement soient rangées de la même manière, alors que les bras de support qui les portent sont disposés selon l'agencement alternatif défini ci-dessus. L'articulation d'une cassette sur un bras support fixé dans un répartiteur permet de la déplacer entre des positions qui correspondent l'une à une position normale d'exploitation pour laquelle elle est insérée entre deux autres cassettes avec lesquelles elle est alors alignée, ces cassettes étant portées par des bras de répartiteur montés différemment de celui sur lequel elle est articulée et une position propice aux interventions pour laquelle elle est quasi totalement sortie de l'alignement de cassettes dans lequel elle est normalement incorporée.

Par ailleurs, chaque cassette 23 comporte des structures de lovage 24 prévues pour recevoir des fibres optiques, qui sont illustrées sur la figure 8. Pour une même cassette, ces fibres optiques comprennent, d'une part, des fibres appartenant à un groupe de fibres issu d'un câble de transmission ou de distribution soumis à répartition, d'autre part des fibres intermédiaires de liaison des fibres précédentes aux éléments individuels de connexion 8 de l'embase 6 qui est portée par le bras de support sur lequel la cassette est articulée. Les structures de lovage 20 d'une cassette sont formées par des parois internes en saillie sur le fond de cette cassette qui sont disposées, de manière connue de l'homme de métier, pour éviter tout risque de cassure aux longueurs de fibre optiques que l'on prévoit de lover dans la cassette.

Deux conduits séparés sont prévus pour permettre aux fibres d'un groupe et aux fibres intermédiaires de liaison de pénétrer dans une cassette dans la zone où cette cassette s'articule sur l'élément d'articulation 26 du bras de support qui la porte. Dans la réalisation présentée où la cassette présente une symétrie par rapport à un plan médian, deux conduits 29 et 30 ou 29' et 30' s'ouvrent latéralement aux extrémités de la cassette, dans les petits côtés de cette cassette et de part et d'autre de chacune des portées d'axe 28 ou 28', seuls étant utilisés les canaux qui sont proches de la portée d'axe par l'intermédiaire de laquelle la cassette est portée par un bras de support.

Les conduits 29 et 29' d'une cassette sont agencés pour permettre aux fibres d'un groupe de pénétrer dans la cassette, afin d'y être raccordées chacune à une fibre intermédiaire de liaison, par l'intermédiaire d'épissures, non représentées.

Il est prévu d'équiper d'un auxiliaire d'immobilisation de fibres, celui des conduits par l'intermédiaire duquel passent les fibres d'un groupe pour pénétrer dans une cassette. Cet auxiliaire d'immobilisation est par exemple un cavalier d'amarrage, encliquetable, tel que décrit en liaison avec la figure 4, dans la demande de brevet français 2789497, prévu pour permettre l'immobilisation d'au moins une gaine protectrice tubulaire dans laquelle est placé tout ou partie d'un groupe de fibres, tel qu'envisagé ci-dessus.

Les conduits 30 et 30' d'une cassette sont agencés pour permettre aux fibres intermédiaires de liaison circulant dans le canal en U d'un bras de support de pénétrer dans une cassette 23, articulée sur ce bras au niveau de l'une de ses portées d'axe, par celui de ces conduits qui voisine cette portée, sans risque de pliure et donc de cassure, quelle que soit la rotation de la cassette autour de l'axe de l'élément d'articulation du bras de support qui la porte. Une telle rotation est ici possible entre la position d'exploitation et une position limite d'intervention qui est supposée mécaniquement fixée par butée d'une partie de la cassette contre une partie du bras sur lequel cette cassette est articulée.

Dans la réalisation proposée, il est prévu que les fibres d'entrée/sortie et les fibres intermédiaires de liaison reliées entre elles au niveau d'une cassette pénètrent par des canaux 29 et 30, ou 29' et 30', qui leur sont réservés de part et d'autre d'une même portée d'axe 28 ou 28' de la cassette. Le conduit 30 ou 30', par lequel pénètrent les fibres intermédiaires de liaisons, est disposé de manière à s'ouvrir au long du prolongement, portant l'élément d'articulation 26 ou 26' du bras de support contre lequel vient s'appliquer la cassette, lorsque celle-ci est en position d'exploitation. Ce prolongement laisse à cet effet subsister un vide autour de l'élément d'articulation qu'il porte, ce vide pouvant être exploité pour le passage de fibres, lorsqu'une cassette est montée sur cet élément.

Comme connu, l'épissurage d'une fibre d'un groupe à une fibre intermédiaire de liaison peut être réalisé par divers moyens dont la forme extérieure est usuellement tubulaire et dont le maintien en position dans la cassette est classiquement réalisé par un empilage de languettes élastiques 31 entre lesquelles viennent s'immobiliser les diverses épissures entre fibres. Le maintien des parties de fibres contenues dans une cassette est classiquement complété au moyen de pattes de maintien 32 saillant des parois de la cassette parallèlement à son fond de manière à partiellement couvrir les parties de cette cassette où sont susceptibles de se positionner les fibres, lorsqu'elles sont lovées.

Les fibres optiques issues des embases 6 passent donc dans les conduits 30 et 30' et les fibres issues des câbles passent dans les conduits 29, 29' ou 30 et 30' selon l'architecture optimale choisie. Les liaisons entre les fibres peuvent être réalisées par des soudures épissures, unitaires ou groupées. Dans le premier cas, les épissures sont positionnées entre les lames élastiques 31. Dans le second cas, ces lames 31 sont détachées de la cassette.

Les quatre conduits 29, 29', 30 et 30' sont contigus aux portées d'axe 28 et 28' et ainsi les mouvements pour intervenir sur des fibres dans une cassette occasionnent des déplacements négligeables sur les fibres non concernées de la cassette.

Au moins une partie des embases 6 prévues au niveau d'au moins deux des baies, telles 11A et 11B sur la figure 3 est initialement mise en place avant toute opération de jarretièrage au niveau du répartiteur qui comporte ces baies. Dans la mesure où le nombre d'embases prévues dans un tel répartiteur est particulièrement élevé, il est prévu de réaliser les opérations de jarretièrage de manière automatique au moyen d'un ensemble robotisé 33 d'outillages spécialisés, apte à se déplacer devant les baies que comporte le répartiteur pour permettre aux organes d'intervenir dans le cadre des opérations nécessaires à la réalisation du jarretièrage et à son évolution au cours du temps pour chacun des points comportés par les embases 6 qui sont disposées en face avant des baies.

L'ensemble 33 est ici supposé prévu pour se déplacer selon deux directions d'un plan parallèle au plan de référence que définissent les faces avants des embases à l'avant des baies. Il est par exemple monté mobile en translation sur un support vertical 34 qui est lui-même prévu mobile en translation dans le sens horizontal et qui comporte en conséquence des moyens de déplacement, ici supposés motorisés et pilotés par une logique de gestion programmée, non représentée, apte à superviser les opérations de jarretièrage et d'évolution du jarretièrage évoquées ci-dessus pour l'ensemble du répartiteur. Le guidage du support vertical 34 lors de ses déplacements horizontaux est par exemple guidé par des rails 35 respectivement disposés en haut et en bas du répartiteur parallèlement au plan de référence défini plus haut, comme on le voit sur les figures 3 et 4.

Sur les figures 9A à 9D, est décrit le module conforme à l'invention dans des positionnements relatifs du bras 19 et de la cassette 23 différents, rendus possible grâce aux caractéristiques de ces éléments.

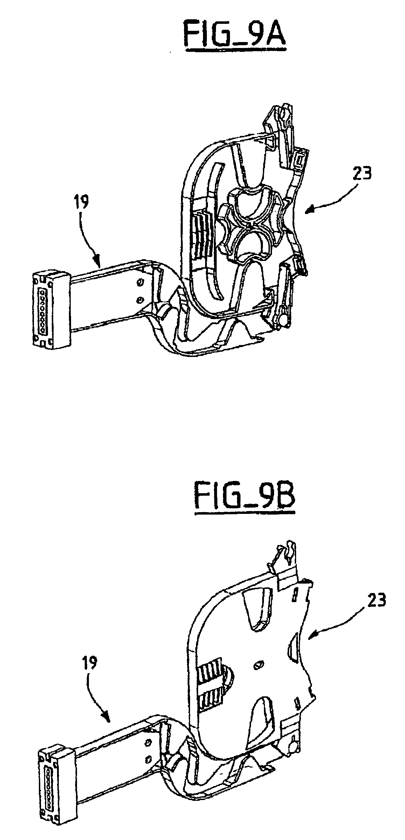

Comme visible sur les figures 9A et 9B, la cassette 23 peut être positionnée au-dessus du bras 19, avec son fond du même côté que le fond du bras (figure 9A) ou avec son fond du côté opposé par rapport à celui du bras (figure 9B). Sa position est stable par appui sur le bras 19.

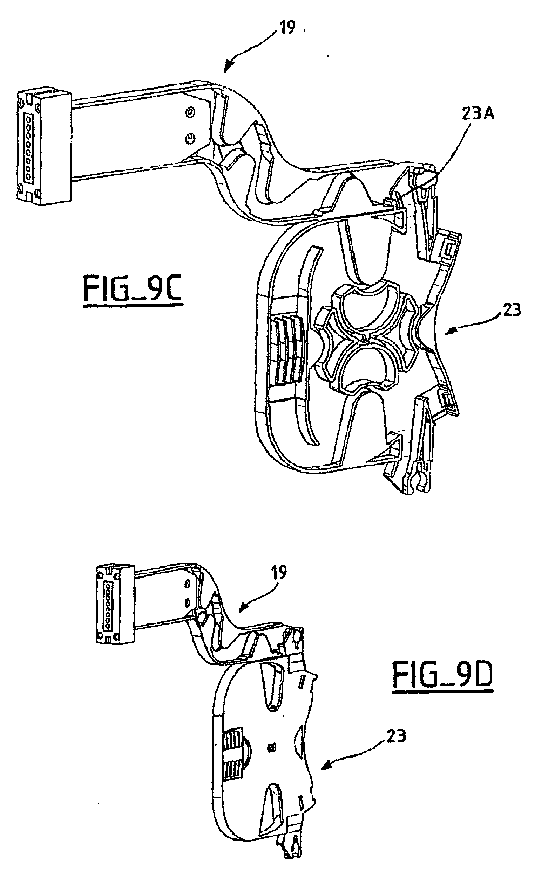

Comme visible sur les figures 9C et 9D, la cassette 23 peut être positionnée au-dessous du bras 19, avec son fond du même côté que le fond du bras (figure 9C) ou avec son fond du côté opposé par rapport à celui du bras (figure 9D). Sa position est alors stable grâce à un agencement d'encliquetage de la cassette sur le bras (non décrit plus haut) réalisé par un cliquet 23A porté par la cassette et venant s'encliqueter dans un orifice correspondant du bras.

Grâce à la conformation symétrique de la cassette, ces différentes dispositions relatives peuvent être obtenues.

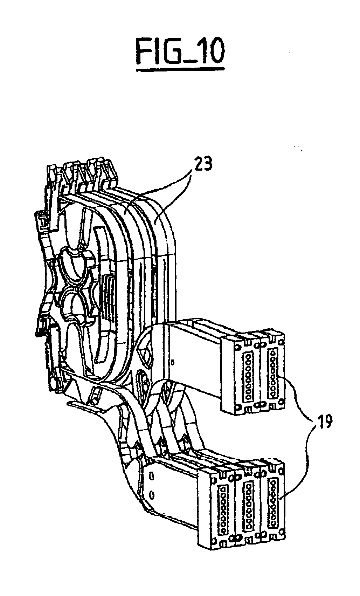

La figure 10 est une vue d'ensemble du mode d'assemblage préféré de plusieurs modules et correspond à un mode d'assemblage du type de celui représenté sur la figure 5 sans représentation des éléments du répartiteur.

Comme il a déjà été explicité plus haut, grâce à l'invention, un alignement optimalement compact est possible tout en respectant les positions des embases de connexion et tout en bénéficiant de la possibilité de manipuler les fibres sans démontage grâce à l'articulation entre bras 19 et cassette 23.

## Revendications

1. Module de distribution et de connexion (19, 23) de fibres optiques comportant un bras de guidage (19) de chaque fibre fixé par sa première extrémité sur un support (13B) de rangée d'embases de connexion (6) et relié par sa seconde extrémité à une cassette de lovage (23) de chaque fibre, **caractérisé en ce que** ladite cassette de lovage (23) est montée sur ledit bras (19) par l'intermédiaire d'une articulation, ledit bras étant doublement coudé en sens inverse dans deux dimensions et de préférence à mi-longueur.

2. Module selon la revendication 1, **caractérisé en ce que** ledit bras (19) est fixe, une fois installé sur un répartiteur.

3. Module selon la revendication 1 ou 2, **caractérisé en ce que** ledit bras (19) comporte, à sa seconde extrémité, un élément d'articulation (26) pour ladite cassette (23) constitué d'un pivot horizontal.

4. Module selon la revendication 3, **caractérisé en ce que** ce pivot fait saillie latéralement d'un prolongement plan du fond d'un canal en U que forme le bras.

5. Module selon l'une des revendications précédentes, **caractérisé en ce que** ladite cassette (23) comporte un élément d'articulation (28, 28'), formé d'une portée pour pivot, complémentaire de l'élément d'articulation (26) porté par le bras de support (19)

6. Module selon la revendication 5, **caractérisé en ce que** l'élément d'articulation complémentaire porté par ladite cassette est flanqué par deux conduits (29, 30 ou 29', 30') pour fibre, un premier de ces conduits (30 ou 30'), réalisé vers l'intérieur de la cassette par rapport à l'autre et à l'élément d'articulation complémentaire (28 ou 28') qu'il jouxte, étant destiné au passage de chaque fibre vers le bras portant la cassette, lorsque celle-ci est portée par l'intermédiaire de l'élément d'articulation complémentaire que ce premier conduit jouxte, le second de ces conduits (29 ou 29'), réalisé vers l'extérieur de la cassette par rapport au premier conduit et à l'élément d'articulation complémentaire qu'il jouxte, étant destiné au passage des fibres émanant de câbles de transmission ou de distribution qui sont raccordées à la cassette.

7. Module selon la revendication 5 ou 6, **caractérisé en ce que** ladite cassette (23) comporte deux éléments d'articulation (28, 28'), symétriquement disposés par rapport au plan transversal au niveau des extrémités d'un des grands côtés du boîtier que forme la cassette s'articulant par l'un ou l'autre de ces deux éléments d'articulation complémentaires (28 ou 28') suivant le montage prévu pour le bras (19 ou 19').

8. Module selon l'une des revendications précédentes, **caractérisé en ce que** ladite cassette de lovage (23) porte un cliquet d'encliquetage (23A) destiné à coopérer avec un orifice correspondant du bras (19).

## Claims

1. A module for distributing and connecting (19, 23) optical fibers including an arm (19) for guiding each fiber, fixed by its first end on a row support (13B) of connecting bases (6) and connected by its second end to a box (23) for coiling each fiber, **characterized in that** said coiling box (23) is mounted on said arm (19) via a joint, said arm being doubly bent in the reverse direction in two dimensions and preferably at half-length.

2. The module according to claim 1, **characterized in that** said arm (19) is fixed, once installed on a distributor.

3. The module according to claim 1 or 2, **characterized in that** said arm (19) includes at its second end, a joint member (26) for said box (23) consisting of a horizontal pivot.

4. The module according to claim 3, **characterized in that** this pivot laterally protrudes from a planar extension of the bottom of a U-shaped channel which the arm forms.

5. The module according to any of the preceding claims, **characterized in that** said box (23) includes a joint member (28, 28') formed with a pivot span, complementary to the joint member (26) borne by the supporting arm (19).

6. The module according to claim 5, **characterized in that** the complementary joint member borne by said box is flanked by two fiber conduits (29, 30 or 29', 30'), a first of these conduits (30 or 30') being made towards the inside of the box relatively to the other and to the complementary joint member (28 or 28') to which it is adjacent, being intended for letting each fiber through towards the arm bearing the box, when the latter is borne via the complementary joint member which is adjacent to this first conduit, the second of these conduits (29 or 29') being made towards the outside of the box relatively to the first conduit and to the complementary joint member to which it is adjacent, being intended for letting through fibers from transmission or distribution cables which are connected to the box.

7. The module according to claim 5 or 6, **characterized in that** said box (23) includes two joint members (28, 28'), symmetrically positioned relatively to the transverse plane at the ends of the large sides of the casing which forms the box, being jointed by either one of these two complementary joint members (28 or 28') according to the assembly provided for the arm (19 or 19').

8. The module according to any of the preceding claims, **characterized in that** said coiling box (23) bears a pawl for a detent mechanism (23A) intended to cooperate with a corresponding orifice of the arm (19).

## Patentansprüche

1. Verteilungs- und Verbindungsmodul (19, 23) für Lichtleitfasern, das einen Führungsarm (19) für jede Faser aufweist, der mit seinem ersten Ende an einem Träger (13B) einer Verbindungsleisten-Reihe (6) befestigt ist und mit seinem zweiten Ende mit einer Aufschießkassette (23) jeder Faser verbunden ist, **dadurch gekennzeichnet, dass** die Aufschießkassette (23) an dem Arm (19) über ein Gelenk angebracht ist, wobei der Arm in zwei Dimensionen in entgegengesetzten Richtungen und vorzugsweise auf halber Länge doppelt gebogen ist.

2. Modul nach Anspruch 1, **dadurch gekennzeichnet, dass** der Arm (19) fest ist, sobald er an einem Verteiler installiert worden ist.

3. Modul nach Anspruch 1 oder 2, **dadurch gekennzeichnet, dass** der Arm (19) an seinem zweiten Ende ein Gelenkelement (26) für die Kassette (23) aufweist, das aus einem horizontalen Drehzapfen gebildet ist.

4. Modul nach Anspruch 3, **dadurch gekennzeichnet, dass** dieser Drehzapfen von einer ebenen Verlängerung des Bodens eines U-förmigen Kanals, den der Arm bildet, seitlich vorsteht.

5. Modul nach einem der vorhergehenden Ansprüche, **dadurch gekennzeichnet, dass** die Kassette (23) ein Gelenkelement (28, 28') aufweist, das aus einem Drehzapfenlager gebildet ist, das zu dem Gelenkelement (26), das von dem Trägerarm (19) getragen wird, komplementär ist.

6. Modul nach Anspruch 5, **dadurch gekennzeichnet, dass** das von der Kassette getragene komplementäre Gelenkelement von zwei Leitungen (29, 30 oder 29', 30') für die Faser flankiert ist, wobei eine erste dieser Leitungen (30 oder 30'), die in Bezug auf die andere und auf das komplementäre Gelenkelement (28 oder 28'), an das es angrenzt, in Richtung des Innenraums der Kassette verwirklicht ist, für den Durchgang jeder Faser zu dem die Kassette tragenden Arm vorgesehen ist, wenn diese mittels des komplementären Gelenkelements, an das die erste Leitung angrenzt, getragen wird, wobei die zweite dieser Leitungen (29 oder 29'), die in Bezug auf die erste Leitung und das komplementäre Gelenkelement, das an sie angrenzt, in Richtung der äußeren Umgebung der Kassette verwirklicht ist, für den Durchgang von Fasern bestimmt ist, die von Übertragungs- oder Verteilungskabeln ausgehen, die mit dieser Kassette verbunden sind.

7. Modul nach Anspruch 5 oder 6, **dadurch gekennzeichnet, dass** die Kassette (23) zwei Gelenkelemente (28, 28') aufweist, die in Bezug auf die Ebene, die zu der Ebene der Enden einer der großen Seiten des Gehäuses, das die Kassette bildet, transversal ist, symmetrisch angeordnet sind, wobei die Kassette über das eine oder das andere dieser zwei komplementären Gelenkelemente (28 oder 28') entsprechend der für den Arm (19 oder 19') vorgesehenen Montage angelenkt ist.

8. Modul nach einem der vorhergehenden Ansprüche, **dadurch gekennzeichnet, dass** die Aufschießkassette (23) eine Einrastklinke (23A) trägt, die dazu bestimmt ist, mit einer entsprechenden Öffnung des Arms (19) zusammenzuwirken.
